# EUROPEAN PATENT APPLICATION

(11) **EP 4 685 441 A1**
(43) Date of publication of application: **28.01.2026**
(21) Application number: 23928746.9
(22) Date of filing: 31.10.2023
(51) Int. Cl.: G01D 21/00

(54) **SENSING DEVICE**

(30) Priority: 20.03.2023 JP 2023043704
(71) Applicant: The Japan Steel Works, Ltd., Tokyo 141-0032 (JP)
(72) Inventor: TAKEMOTO Haruna, Tokyo 141-0032 (JP); FUKUSHI Yusuke, Tokyo 141-0032 (JP); OCHIIWA Takashi, Tokyo 141-0032 (JP)
(74) Representative: Simmons & Simmons LLP (Munich)
(86) International application number: PCT/JP2023/039206
(87) International publication number: WO 2024/195175

(57) **Abstract**

Provided is a sensing device comprising: a first sub-substrate having a first input unit for inputting signals from a plurality of first sensors, a low-pass filter for removing noise of the signals from the first input unit, and a conversion circuit for converting analog signals from the low-pass filter into digital signals; a second sub-substrate having a second input unit for inputting signals from a plurality of second sensors, a low-pass filter for removing noise of the signals from the second input unit, and a conversion circuit for converting analog signals from the low-pass filter into digital signals; a main substrate for supplying electric power to the first sub-substrate and the second sub-substrate; and a control unit for outputting data based on the digital signals.

## Description

### Technical Field

This disclosure relates to a sensing apparatus.

### Background Art

Conventionally, a technology for detecting an abnormality of an industrial machine and the like based on measurement data measured by a sensor is known (see, for example, Patent Literature 1).

### Citation List

### Patent Literature

[Patent Literature 1] International Patent Publication No. 2020/170409

### Summary of Invention

### Technical Problem

However, with conventional technology, for example, it is considered that measurement data measured by a sensor cannot be properly acquired.

An object of the present disclosure is to provide a technology for properly acquiring measurement data measured by the sensor.

### Solution to Problem

In a first example aspect according to the present disclosure, a sensing apparatus includes:
a first sub-substrate including a first input unit configured to receive signals from a first plurality of sensors, a low-pass filter configured to remove noise in the signals from the first input unit, and a conversion circuit configured to convert analog signals from the low-pass filter into digital signals; a second sub-substrate including a second input unit configured to receive signals from a second plurality of sensors, a low-pass filter configured to remove noise in the signals from the second input unit, and a conversion circuit configured to convert analog signals from the low-pass filter into digital signals; a main substrate configured to supply power to the first sub-substrate and the second sub-substrate, and a control unit configured to output data based on the digital signals.

### Advantageous Effects of Invention

According to the present disclosure, it is possible to properly acquire measurement data measured by a sensor.

### Brief Description of Drawings

Fig. 1 is a diagram showing an example of a configuration of a sensing system according to an embodiment;
Fig. 2 is a diagram showing an example of a sensing apparatus according to an embodiment;
Fig. 3 is a diagram showing an example of a hardware configuration of a control unit of a sensing apparatus according to an embodiment;and
Fig. 4 is a flowchart showing an example of processing performed when the sensing apparatus 10 according to an embodiment detects an abnormality in a specific sensor 50.

### Description of Embodiments

The principles of the present disclosure will be described with reference to several exemplary embodiments. It is to be understood that these embodiments are described for illustrative purposes only and are intended to assist those skilled in the art in understanding and practicing the disclosure without suggesting limitations to the scope of the disclosure. The disclosure described herein is implemented in various ways other than those described below.

In the following description and claims, unless otherwise defined, all technical and scientific terms used herein include the same meanings as are generally understood by those skilled in the art to which the disclosure belongs.

One embodiment of the disclosure will be described below with reference to the drawings.

### <System Configuration>

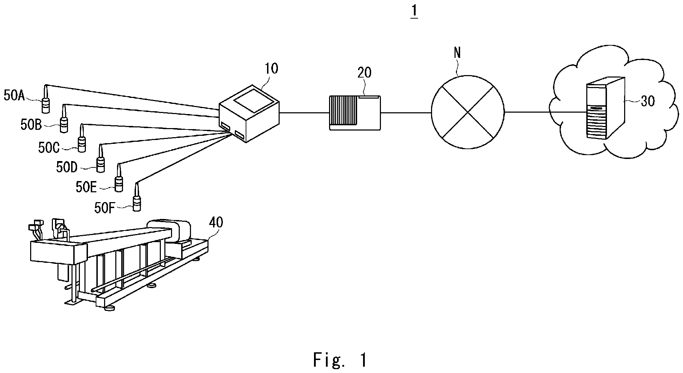

The configuration of a sensing system 1 according to an embodiment will be described with reference to Fig. 1. Fig. 1 is a diagram showing an example of the configuration of the sensing system 1 according to the embodiment. In an example of Fig. 1, the sensing system 1 includes a sensing apparatus 10, an edge apparatus 20, a cloud server 30, and an apparatus to be monitored 40. Further, the sensing system 1 also includes sensors 50 A to F (hereinafter referred to simply as "sensor 50" when no distinction is necessary). Note that, the number of the sensing apparatus 10, the edge apparatus 20, the cloud server 30, the apparatus to be monitored 40, and the sensor 50 is not limited to the example of Fig. 1.

In the example of Fig. 1, the sensing apparatus 10 and the sensor 50 are connected by a cable that transmits analog signals. Further, the sensing g apparatus 10 and the edge apparatus 20 are connected by a cable such as a bus or a LAN. In addition, the sensing apparatus 10 and the cloud server 30 are connected so as to be able to communicate via a network N. Examples of the network N may include, for example, the Internet, a mobile communication system, a wireless LAN (Local Area Network), and a LAN and the like. Examples of the mobile communication system may include, for example, a 5th generation mobile communication system (5G), a 6th generation mobile communication system (6G, Beyond 5G), a 4th generation mobile communication system (4G), 3rd generation mobile communication system (3G) and the like.

The sensor 50 is a sensor which is installed at a specific part of the apparatus to be monitored 40 and performs measurement. The sensor 50 may measure, for example, temperature, vibration (speed, distance, and acceleration), torque, strain, pressure and the like.

The sensing apparatus 10 converts analog signals of the measurement data measured by the sensor 50 into digital signal. In this case, the measurement data may include, for example, data indicating at least one of vibration (speed, distance, acceleration), torque, strain, and pressure of the apparatus to be monitored 40.
In addition, the sensing apparatus 10 may record data based on the digital signals in a storage apparatus inside or outside the sensing apparatus 10. This allows, for example, the maintenance staff to copy the information recorded in the storage apparatus (e.g., an SD memory card) to a notebook PC (personal computer) or the like and take it out to his/her home or the like. In addition, the sensing apparatus 10 may transmit data based on the digital signals to the edge apparatus 20.
In this case, the sensing apparatus 10 may transmit the measurement data for a specific period (e.g., 30 minutes) to the edge apparatus 20 at a specific interval (e.g., once every 3 hours), for example.

The edge apparatus 20 records data related to the apparatus to be monitored 40 and uploads the recorded data to the cloud server 30. The cloud server 30 may analyze the operation status, deterioration status, etc. of the apparatus to be monitored 40 based on the data uploaded from the edge apparatus 20 and provide the analysis result to the user of the apparatus to be monitored 40 via a web site.

The apparatus to be monitored 40 is an apparatus to be measured by the sensing apparatus 10. The apparatus to be monitored 40 may be, for example, an industrial machine such as an extruder (twin-screw extruder) for heating, melting and kneading resin to manufacture a film or a sheet. Note that, the extruder may include a speed reducer that converts the power generated by a motor into a predetermined torque and transmits it to the twin-screw. Further, the apparatus to be monitored 40 may be, for example, an extruder or granulator for manufacturing pellets which are raw materials for resin materials.
The apparatus to be monitored 40 may also be an injection molding machine that molds raw materials melted by heat or the like by pouring them into a mold.

### < Configuration of Sensing Apparatus 10 >

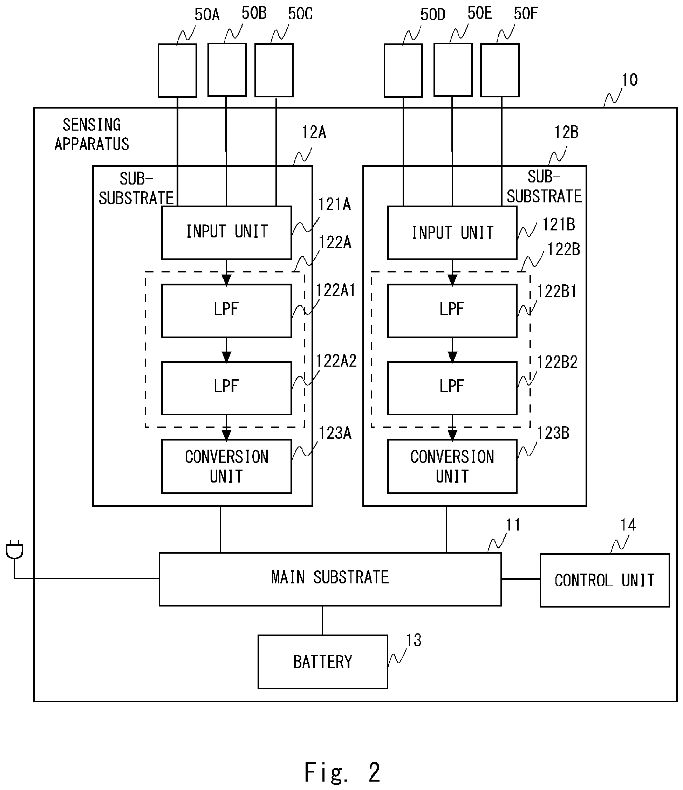

Next, a configuration of a sensing apparatus 10 according to an embodiment will be described with reference to Fig. 2. Fig. 2 is a diagram showing an example of a configuration of a sensing apparatus 10 according to an embodiment. In the example of Fig. 2, the sensing apparatus 10 includes a control unit 14, a main substrate 11, and a battery 13. Further, the sensing apparatus 10 also includes sub-substrates 12 A to B (hereinafter referred to simply as "sub-substrate 12" when no distinction is necessary). Note that, the number of the control unit 14, the main substrate 11, the sub-substrate 12, and the battery 13 is not limited to the example shown in Fig. 2. The control unit 14 may be implemented by a computer 100 such as a microcomputer (microcontroller), for example. Note that, the microcomputer may be a computer in which a CPU, RAM, ROM, and I/O port are integrated into a single integrated circuit, for example. The main substrate 11 and the sub-substrate 12 may be implemented by an ASIC (Application Specific Integrated Circuit) for example.

The sub-substrate 12A has an input unit 121A for inputting signals from a plurality of sensors 50, a low-pass filter 122A for removing noise in the signal from the input unit 121A, and a conversion circuit 123A for converting analog signals from the low-pass filter 122 A into digital signals.

The low-pass filter 122A includes a low-pass filter 122A1 for attenuating signals having a first frequency or higher from the input unit 121A, and a low-pass filter 122A2 for attenuating signals having a second frequency or higher of the signals from the low-pass filter 122A1, the second frequency being lower than the first frequency. By cascading the two low-pass filters in this manner, the level of the signals to be blocked can be further suppressed. Note that, at least one of the low-pass filter 122A1 and the low-pass filter 122A2 may be an anti-aliasing filter that prevents aliasing in the frequency domain.

Note that, the low-pass filter 122A2 and the conversion circuit 123 A may be implemented on the same IC (Integrated Circuit) chip. Thus, this makes it possible to realize a low-pass filter 122A including desired characteristics, for example, by combining the IC chip which is a general-purpose component, with the low-pass filter 122A1.

The sub-substrate 12A may include a dip switch capable of setting the value of the first frequency, which is the cutoff frequency of the low-pass filter 122A1. Thus, for example, when the number of the apparatuses to be monitored 40 around the installation location of the sensing apparatus 10 is relatively large, and the ambient temperature is relatively high etc., causing the relatively large noise, the user (engineer) who installs the sensing apparatus 10 can set the value of the first frequency to a more appropriate value (e.g., a relatively high value). The dip switch is, for example, a small-sized switch implemented mounted on an electronic circuit board.

Further, the control unit 14 may set the value of the first frequency, which is the cutoff frequency of the low-pass filter 122A1, based on a specific signal input from the input unit 121 A (a specific waveform signal for testing, for example, a sine wave). This allows values to be automatically set according to the surrounding environment. In this case, a cable from an apparatus that outputs the specific signal may be connected to the input unit 121 A by the user. Then, the control unit 14, for example, may detect that the apparatus is connected and calculate the error rate of digital signals converted by the conversion circuit 123A while changing the cutoff frequency of the low-pass filter 122A1 to each of a plurality of values. Then, the control unit 14, for example, may set the value that causes the lowest error rate among the plurality of values, as the value of the first frequency.

The sub-substrate 12B may be similar to the sub-substrate 12 A. In this case, the description of the sub-substrate 12B may be replaced by substituting "B" for "A" in the symbols used in the description of the sub-substrate 12A. Note that, in the example of Fig. 2, sensors 50 A to C are connected to the input portion 121A, and sensors 50D to F are connected to the input portion 121B.

The main substrate 11 supplies power to the sub-substrate 12 A and the sub-substrate 12B. The control unit 14 controls each part of the sensing apparatus 10. The control unit 14 may output (record, save) data based on digital signals from the sub-substrate 12 to a storage apparatus inside or outside the sensing apparatus 10. The control unit 14 may output (transmit) the data based on digital signals from the sub-substrate 12 to the edge apparatus 20. Also, the control unit 14 may, for example, switch the sensor 50 to be input by the input portion 121A by controlling the switch of the input portion 121A. Also, the control unit 14 may, for example, control the switch of the input portion 121A so that the input portion 121 A can acquire the measurement data from a plurality of sensors 50 in parallel (simultaneously). Similarly, the control unit 14 may, for example, switch the sensor 50 to be input by the input portion 121B, by controlling the switch of the input portion 121B. Further, the control unit 14 may, for example, control the switch of the input unit 121B so that the input unit 121B can acquire each measurement data from the plurality of sensors 50 in parallel (simultaneously).

When the control unit 14 is not outputting the data based on digital signals from the sub-substrate 12 (e.g., when no measurement is being made by a particular sensor 50), the main substrate 11 may charge the battery 13 from the commercial power supply. When the control unit 14 is outputting the data based on digital signals from the sub-substrate 12 (e.g., when a measurement is being made by a particular sensor 50), the main substrate 11 may power the sub-substrate 12 from the battery 13. Thus, for example, the influence of noise can be reduced in the measurement data uploaded to the cloud server 30 and the measurement data recorded in the storage apparatus. This is because, for example, noise from the commercial power supply may affect the low-pass filter 122A or the like. The main substrate 11 may acquire, for example, information indicating whether the measurement is being performed by a specific sensor 50 from the control unit 14 or the sub-substrate 12.

### (Log Storage for Abnormalities in Monitored Apparatus 40)

The control unit 14 may temporarily record the measurement data by a specific sensor 50 at each point in time. Here, the control unit 14, for example, may overwrite the old measurement data with the new measurement data in order in a specific area of the storage unit.

Then, the control unit 14 may detect the abnormality of the apparatus to be monitored 40 based on the specific sensor 50. Here, the control unit 14 may determine that the abnormality has occurred in the apparatus to be monitored 40, for example, when the amount of change in the measured data by the specific sensor 50 is equal to or greater than the threshold value.

Then, when the abnormality of the apparatus to be monitored 40 is detected, the control unit 14 may record measurement data measured during a specific period including before and after the occurrence of the abnormality in a specific storage unit among the temporarily recorded measurement data. Thus, when the abnormality occurs in the apparatus to be monitored 40, data for several minutes before and after the occurrence of the abnormality can be logged.

Further, when the abnormality of the apparatus to be monitored 40 is detected, the control unit 14 may record the measurement data by sensors 50 other than the specific sensor 50 in the specific storage unit until a specific time elapses after the detection of the abnormality. Thus, when the abnormality occurs in the apparatus to be monitored 40, data from other sensors for several minutes after the occurrence of the abnormality can be logged.

### < Hardware Configuration of Control Unit 14 >

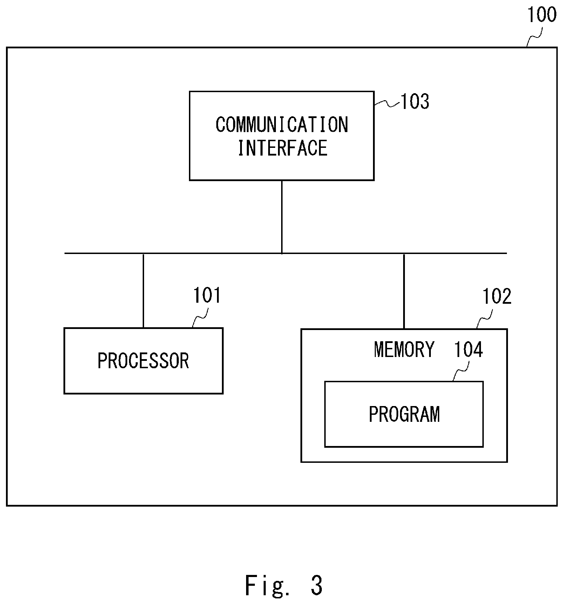

Fig. 3 is a diagram showing an example of a hardware configuration of the control unit 14 (computer 100) of the sensing apparatus 10 according to the embodiment. In the example of Fig. 3, the computer 100 includes a processor 101, a memory 102, and a communication interface 103. Each of these units may be connected by a bus or the like. The memory 102 stores at least a part of a program 104. The communication interface 103 includes interfaces necessary for communication with other network elements.

When the program 104 is executed in cooperation with the processor 101 and the memory 102 or the like, at least a part of the processing of the embodiment of the present disclosure is performed by the computer 100. The memory 102 may be of any type. Processor 101 may include one or more of a general purpose computer, a dedicated computer, a microprocessor, a digital signal processor (DSP), and, a processor based on a multi-core processor architecture as a non-limiting example. Computer 100 may include plurality of processors, such as application specific integrated circuit chips that are temporally dependent on a clock that synchronizes the main processor.

Programs may be stored and supplied to a computer using various types of non-transitory computer readable medium. Non- transitory computer readable medium includes various types of physical recording medium. Examples of non-transitory computer readable medium include magnetic recording medium, magneto-optical recording medium, optical disk medium, semiconductor memory, and the like. Magnetic recording medium includes, for example, flexible disks, magnetic tapes, hard disk drives, and the like. Magneto-optical recording medium includes, for example, magneto-optical disks, and the like. Optical disk medium includes, for example, Blu-ray discs, CD (Compact Disc)-ROM (Read Only Memory), CD-R (Recordable), CD-RW (ReWritable), and the like. Semiconductor memories include, for example, solid-state drives, mask ROMs, PROM (Programmable ROM), EPROM (Erasable PROM), flash ROMs, and random-access memory (RAM), and the like. The program may also be supplied to the computer by various types of transitory computer readable medium. Examples of transitory computer readable medium include electrical signals, optical signals, and electromagnetic waves. The transitory computer readable medium can supply the program to the computer via a wired or wireless communication path such as a wire or optical fiber

### < Processing >

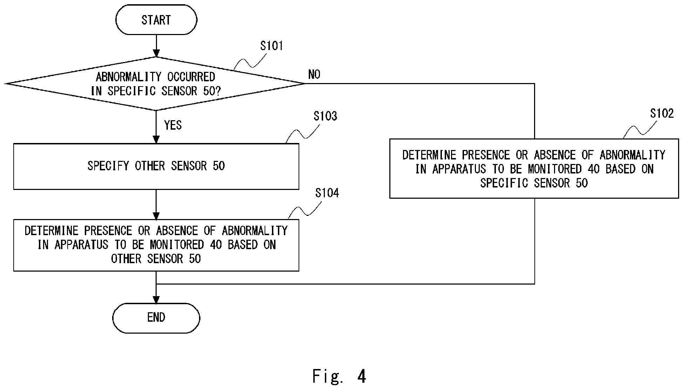

Next, with reference to Fig. 4, an example of processing when the sensing apparatus 10 according to the embodiment detects an abnormality in a specific sensor 50 will be described. Fig. 4 is a flowchart showing the example of processing when the sensing apparatus 10 according to the embodiment detects an abnormality in a specific sensor 50. It should be noted that the order of the following processes may be appropriately changed to the extent that there is no contradiction.

In step S101, the control unit 14 determines whether or not an abnormality has occurred in a specific sensor 50 for determining the abnormality in the apparatus to be monitored 40. Here, the control unit 14 may determine that an abnormality has occurred in the sensor 50, for example, when the value of the data measured by the sensor 50 is outside a specific range.

If no abnormality has occurred in the specific sensor 50 (NO in step S101), the control unit 14 determines presence or absence of an abnormality in the apparatus to be monitored 40 based on the specific sensor 50 (step S102) and ends the process. Here, the control unit 14 may determine that the abnormality has occurred in the apparatus to be monitored 40, for example, when the amount of change in the data measured by the specific sensor 50 is equal to or greater than the threshold value.

On the other hand, if an abnormality has occurred in the specific sensor 50 (YES in step S 101), the control unit 14 specifies another sensor 50 to determine the presence or absence of an abnormality in the apparatus to be monitored 40 (step S103). Here, the control unit 14 may specify the other sensor 50 based on, for example, the transition of the data measured by each of the plurality of sensors 50 and similarity with the specific sensor 50 in at least one of the value ranges.

In this case, the control unit 14 may calculate, for example, a probability distribution (e.g., information entropy, information quantity, etc.) related to the feature amount of the data measured by each sensor 50. Then, the control unit 14 may calculate the differences between the calculated probability distributions as the similarity using, for example, KL (Kullback-Leibler) divergence or JS (Jensen-Shannon) divergence etc. Further, the control unit 14 may calculate the similarity based on, for example, the mutual information amount or the differences between the entropies.

Furthermore, the control unit 14 may calculate, for example, the correlation coefficient between the transition of the data measured by each of the plurality of sensors 50 and the transition of the data measured by each of the specific sensors 50 as the similarity.

Additionally, the control unit 14 may determine the similarity value higher, for example, as the range of the data values measured by each of the plurality of sensors 50 is closer to the range of the data values measured by each of the specific sensors 50.

Subsequently, the control unit 14 determines presence or absence of an abnormality in the apparatus to be monitored 40 based on the other sensors 50 (step 104) and ends the processing. Here, the control unit 14 may determine that the abnormality has occurred in the apparatus to be monitored 40, for example, when the amount of change in the data measured by the other sensors 50 is equal to or greater than the threshold value.

Note that, the present disclosure is not limited to the above-described embodiments and may be appropriately modified without departing from the purport.

This application is based upon and claims the benefit of priority from Japanese Patent Application 2023- 043704, filed on March 20, 2023, the disclosure of which is incorporated herein in its entirety by reference.

### Reference Signs List

1 SENSING SYSTEM
10 SENSING APPARATUS
11 MAIN SUBSTRATE
12A-B SUB-SUBSTRATE
121A-B INPUT UNIT
122A-B, 122A1, 122B1, 122A2, 122B2 LOW-PASS FILTER
123A, 123B CONVERSION CIRCUIT
13 BATTERY
14 CONTROL UNIT
20 EDGE APPARATUS
30 CLOUD SERVER
40 APPARATUS TO BE MONITORED
50 A-F SENSOR
100 COMPUTER
101 PROCESSOR
102 MEMORY
103 COMMUNICATION INTERFACE
104 PROGRAM

## Claims

1. A sensing apparatus comprising:
a first sub-substrate including a first input unit configured to receive signals from a first plurality of sensors, a low-pass filter configured to remove noise in the signals from the first input unit, and a conversion circuit configured to convert analog signals from the low-pass filter into digital signals;
a second sub-substrate including a second input unit configured to receive signals from a second plurality of sensors; a low-pass filter configured to remove noise in the signals from the second input unit, and a conversion circuit configured to convert the analog signals from the low-pass filter into digital signals;
a main substrate configured to supply power to the first sub-substrate and the second sub-substrate; and
a control unit configured to output data based on the digital signals.

2. The sensing apparatus according to claim 1,
wherein the control unit determines presence or absence of an abnormality in an apparatus to be monitored based on a specific sensor; and determines, when an abnormality of the specific sensor is detected, the presence or absence of an abnormality in the apparatus to be monitored based on another sensor.

3. The sensing apparatus according to claim 2,
wherein when the abnormality of the specific sensor is detected, the control unit determines the other sensor based on similarity between at least one of a transition of data measured by each of the plurality of sensors and a range of values thereof and that of the specific sensor.

4. The sensing apparatus according to claim 2 or 3, wherein the control unit:
temporarily records measurement data measured by the specific sensor at each point in time, and
records, when an abnormality of the apparatus to be monitored is detected based on the specific sensor, measurement data measured during a specific period including periods before and after the occurrence of the abnormality included in the temporarily recorded measurement data in a specific storage unit.

5. The sensing apparatus according to claim 4,
wherein the control unit records, when an abnormality of the apparatus to be monitored is detected based on the specific sensor, measurement data measured by the other sensor when the abnormality occurs in the specific storage unit.

6. The sensing apparatus according to claim 1,
wherein the low-pass filter of the first sub-substrate includes:
a first low-pass filter configured to attenuate signals having a first frequency or higher from the first input unit, and
a second low-pass filter configured to attenuate signals having a second frequency or higher of the signals from the first low-pass filter, the second frequency being lower than the first frequency.

7. The sensing apparatus according to claim 6, wherein the first sub-substrate includes a dip switch for configured to set a value of the first frequency of the first low-pass filter.

8. The sensing apparatus according to claim 6 or 7, wherein the control unit sets a value of the first frequency of the first low-pass filter based on a specific signal input from the first input unit.

9. The sensing apparatus according to claim 1, wherein the main substrate:
charged to a battery from a commercial power source when the control unit is not outputting data based on the digital signal; and
supplies power from the battery to the first and second sub-substrates when the control unit is outputting data based on the digital signal.
